(19) 

(11) **EP 4 627 657 B1**

(12) **EUROPÄISCHE PATENTSCHRIFT**

(45) Veröffentlichungstag und Bekanntmachung des Hinweises auf die Patenterteilung:
**19.08.2026 Patentblatt 2026/34**

(21) Anmeldenummer: **24794020.8**

(22) Anmeldetag: **16.10.2024**

(51) Internationale Patentklassifikation (IPC):
***H01M 10/48*** *(2006.01)*

(52) Gemeinsame Patentklassifikation (CPC):
**G01B 11/165; H01M 10/48; H01M 10/653; H01M 50/202; H01M 50/204;** Y02E 60/10

(86) Internationale Anmeldenummer:
**PCT/EP2024/079111**

(87) Internationale Veröffentlichungsnummer:
**WO 2025/103688 (22.05.2025 Gazette 2025/21)**

(54) **MESSVERFAHREN ZUR ERFASSUNG DER DEHNUNG IN EINEM BATTERIEMODUL**

MEASUREMENT METHOD FOR DETECTING STRAIN IN A BATTERY MODULE

PROCÉDÉ DE MESURE POUR DÉTECTER UNE CONTRAINTE DANS UN MODULE DE BATTERIE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.11.2023 DE 102023004712**

(43) Veröffentlichungstag der Anmeldung:
**08.10.2025 Patentblatt 2025/41**

(73) Patentinhaber: **Mercedes-Benz Group AG**
**70372 Stuttgart (DE)**

(72) Erfinder:
- **AVDYLI, Arber**
  **73262 Reichenbach an der Fils (DE)**
- **LUTOLLI, Albina**
  **72768 Reutlingen (DE)**
- **KEMPINSKI, Michal**
  **70191 Stuttgart (DE)**

(74) Vertreter: **Novagraaf Group**
**Chemin de l'Echo 3**
**1213 Onex / Geneva (CH)**

(56) Entgegenhaltungen:
**CN-A- 115 790 891** **DE-A1- 102014 219 720**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 627 657 B1

## Beschreibung

Die Erfindung betrifft ein Messverfahren zur Erfassung der Dehnung im Bereich der Anbindung von Batterieeinzelzellen bei einem Batteriemodul mit mehreren Batterieeinzelzellen nach der im Oberbegriff von Anspruch 1 näher definierten Art.

Batteriemodule sind so weit aus dem Stand der Technik bekannt. Sie bestehen typischerweise aus einer Anordnung - wie beispielsweise einem Stapel - von Batterieeinzelzellen, welche in einem Modulgehäuse oder einem Batteriegehäuse angeordnet sind. Zum Beispiel kann es sich bei diesen Batterieeinzelzellen um prismatische Zellen handeln, welche in einem Stapel aufgestapelt und zwischen Endplatten bzw. Druckbrillen miteinander verspannt bzw. verpresst ausgebildet sind.

Vor allem beim Einsatz von derartigen Batteriemodulen in Fahrzeugen ist es entscheidend, dass über potentielle mechanische Beeinträchtigungen, welche in der Folge auch zu thermischen oder elektrochemischen Beeinträchtigungen innerhalb der Batterieeinzelzelle führen können, frühzeitig Informationen vorliegen. In diesem Zusammenhang kann auf die US 2018/0361855 A1 verwiesen werden, welche eine Vielzahl von unterschiedlichen Sensoren innerhalb eines Batteriemoduls zeigt. Diese Sensoren sind in der Art an ein Fahrzeugsystem angebunden, dass Informationen und Warnungen in dem Fahrzeug dargestellt werden können.

Ein weiteres System mit einer Vielzahl von Sensoren zum Messen eines inneren Batteriezustandes ist aus der DE 10 2015 115 102 A1 bekannt. Mit diesem System können beispielsweise die Anschlussspannungen, der Strom und die Temperatur jeder Zelle oder einer repräsentativen Teilmenge von Zellen gemessen werden. Daneben sind weitere Eigenschaften wie die Anzahl der Lade- und Endladezyklen und damit letztlich eine Abschätzung der Alterung der Batterieeinzelzelle beschrieben.

Aus der DE 10 2021 006 259 A1 ist ein Batteriemodul mit einem Rahmenelement bekannt. Ein Deckelement oder eine Bodenplatte ist mittels eines Strukturklebers mit diesem Batteriemodul verklebt.

Die DE 10 2023 000 537 A1 beschreibt einen Wärmeleitkleber, welcher auch für eine Batterie in einem Fahrzeug eingesetzt werden kann. Innerhalb dieses Wärmeleitklebers sind Mikrokugeln eingebettet, welche bei einem bestimmten Temperaturniveau thermisch expandieren und damit die Wärmeleitfähigkeit in dem Kleber ab dieser Grenztemperatur irreversibel stark reduzieren.

Die DE 10 2014 219 720 A1 beschreibt eine Batterie und ein Verfahren zu deren Betrieb. Zur Überwachung der Batterie ist dabei ein Sensor vorgesehen, welcher als Dehnungssensor und/oder Temperatursensor eingesetzt werden kann. Er besteht aus einer Lichtleitfaser mit zwei Faser-Bragg-Gittern an unterschiedlichen Positionen der Faser, welche die Erfassung einer Dehnung und/oder einer Temperaturänderung ermöglichen.

Aus der EP 4 276 432 A1 ist ein optisch arbeitender Temperatursensor bekannt, welcher in Batterien zum Einsatz kommen kann. Er umfasst zur Führung von Lichtstrahlen wenigstens einen Glasfaserleiter. Der Temperatursensor nutzt dabei eine optische Fasermesstechnik mit einer hohen Anzahl an Messstellen pro Glasfaser und einer Erfassungseinheit für mehrere Glasfasern. Damit soll möglichst quasi-kontinuierlich über die Fläche der Batterie verteilt die Temperatur erfasst werden. Dafür werden in einem vorgegebenen Abstand zueinander angeordnete optische Elemente genutzt, welche ihren Abstand zueinander in Abhängigkeit der Temperatur durch eine Ausdehnung oder ein Zusammenziehen der Glasfaser ändern. Letztendlich kann auch dies als Faser-Bragg-Gitter im Sinne des zuvor genannten Standes der Technik interpretiert werden, dient hier aber ausschließlich zur Temperaturmessung.

Aus der CN 115 790 891 A1 ist außerdem ein Sicherheitsüberwachungssystem für eine Lithium-Batterie bekannt, welche ein Klebeband mit integrierter optischer Fasermesstechnik verwendet.

Werden derartige Batteriemodule in Fahrzeugen eingesetzt handelt es sich typischerweise um sogenannte Hochvoltbatterien bzw. HV-Batterien gemäß der Definition in ECE 100R. Hier ist es üblich, dass eine Kühlung der Batterieeinzelzellen erfolgen muss. Ein typischer Aufbau sieht es dabei vor, dass mehrere der Batterieeinzelzellen über einen Wärmeleitkleber mit einer gekühlten Bodenplatte verbunden sind, um Abwärme aus den Batterieeinzelzellen über diesen Wärmeleitkleber hinweg in die gekühlte Bodenplatte abzuleiten. Der Wärmeleitkleber selbst erfüllt dabei vielseitige, teilweise konkurrierende Eigenschaften und Zwecke. Einerseits dient er zur Weiterleitung der Wärmeenergie, andererseits übernimmt er mechanische Aufgaben, wie die Fixierung der Batterieeinzelzellen. Er gleicht zusätzlich Toleranzen bei Platzierung der Batterieeinzelzellen aus und ist im Betrieb mechanischen Lasten ausgesetzt, beispielsweise schwingenden Belastungen durch Vibrationen während der Fahrt, thermomechanischen Belastungen, aber auch Crash-Belastungen im Falle eines Unfalls. Ein ganz entscheidender Punkt bei der mechanischen Belastung des Wärmeleitklebers ist eine schwellende Zug-Scherbelastung durch das reversible Zelldickenwachstum, welches in den Batterieeinzelzellen über jeden Ladehub erneut auftritt. Außerdem sind diese schwellenden Zug-Scherbelastungen überlagert von mit über die Zeit zunehmenden Zug-Scherbelastungen durch ein irreversibles Zelldickenwachstum über die Alterung der Batterieeinzelzellen.

Diese besonderen mechanischen und thermischen Eigenschaften, welche der Wärmeleitkleber erfüllen muss, stehen dabei bei der Entwicklung und Herstellung des Wärmeleitklebers in Konkurrenz zueinander und führen letztlich dazu, dass der Wärmeleitkleber teurer und entsprechend schwerer wird. So muss er beispielsweise möglichst "zäh" sein,

sodass kein abrupter Abriss bzw. kein abruptes Versagen im Falle der Zug-Scherbelastungen entsteht. Gleichzeitig erfordern die benötigten thermischen Eigenschaften eine hohe Wärmeleitfähigkeit, welche typischerweise durch eine Beimischung von thermisch leitfähigen Partikeln erzielt wird. Je höher die Menge dieser Partikel ist, desto spröder wird jedoch der Wärmeleitkleber nach seiner Aushärtung, sodass dies der Forderung nach einem zähen Wärmeleitkleber diametral entgegenläuft.

Bei der Systemauslegung hängen diese mechanischen Eigenschaften ebenso wie die Wärmeleitfähigkeit dabei direkt mit der Spalthöhe des verbauten Klebers, also der Dicke der Kleberschicht zwischen der gekühlten Bodenplatte und den Batterieeinzelzellen, zusammen. Die Bruchdehnung bzw. das Dehnungsvermögen nehmen mit zunehmender Spalthöhe proportional zu, je dicker der Spalt ist, desto höher ist also die zulässige Scherverschiebung. Bei der Wärmeleitfähigkeit wirkt sich die Spalthöhe ebenfalls proportional aus, jedoch in der anderen Richtung, sodass die Wärmeleitfähigkeit umso besser wird, je kleiner der Spalt und damit die Dicke des Wärmeleitklebers ist. Zusätzlich hängen die Wärmeleiteigenschaften des Klebers auch noch von der Anpresskraft ab.

Über die Alterung der Batterieeinzelzellen nehmen nun die mechanischen Zug-Scherbelastungen infolge des bereits angesprochenen irreversiblen Zelldickenwachstums an dem Wärmeleitkleber zu. Zunehmend wird aber der Bedarf an Kühlung immer größer, da auch die elektrischen Innenwiderstände der Batterieeinzelzellen mit zunehmender Alterung zunehmen. Diese Abwärme muss dann sicher und zuverlässig über den Wärmeleitkleber abgeführt werden. Kommt es hier zu einem zusätzlichen Wärmestau wird der Prozess der Alterung beschleunigt, was wieder zu einer vermehrten mechanischen Belastung des Wärmeleitklebers führt. Vor allem bei neuartigen Zelltechnologien für Lithium-Ionen-Zellen, bei denen siliziumhaltige Anoden zum Einsatz kommen, ist das Zelldickenwachstum noch stärker ausgeprägt als bei den konventionellen Aufbauten mit Graphitanoden. Es reichen hier oft schon wenige Zyklen aus, um eine Ablösung zumindest im Bereich der Randzellen bei einem Zellstapel hervorzurufen, der Wärmeleitkleber versagt also in diesem Bereich sehr schnell.

Die thermische Kühlperformance für die jeweilige Batterieeinzelzelle wird nach einem solchen Versagen des Wärmeleitklebers erheblich schlechter, was zur Konsequenz hat, dass bestimmte Zellen kontinuierlich stärker erwärmt werden als andere Batterieeinzelzellen in dem Batteriemodul. Diese schränken somit das gesamte Batteriemodul hinsichtlich der Leistungsfähigkeit ein. Außerdem führt dies zu einer inhomogenen Alterung der Zellen und kann im schwerwiegendsten Fall auch sicherheitskritisch sein, wenn es zu extremen Erwärmungen und/oder starken mechanischen Belastungen kommt.

Aus dem allgemeinen Stand der Technik sind hier verschiedene Lösungsvorschläge bekannt, wie beispielsweise die Anhebung der mechanischen Eigenschaften des Wärmeleitklebers. Hierfür muss jedoch eine Minderung der thermischen Leitfähigkeit in Kauf genommen werden.

Parallel dazu ist es analog zum oben genannten Stand der Technik bekannt Temperatursensoren vorzusehen, um so eine übermäßige Erwärmung detektieren zu können. Obwohl Temperatursensoren an sich einfache und kostengünstige Bauteile sind ist es bei der üblichen Anzahl von Zellen in einer Traktionsbatterie für ein Fahrzeug mit hohem Aufwand verbunden, für jede einzelne oder kleine Gruppen von wenigen Zellen jeweils einen Temperatursensor vorzusehen, diesen an der entsprechend sinnvollen Stelle der Zelle zu platzieren und die Messwerte abzufragen, wofür diese über eine Kabelverbindung beispielsweise zu einer Batteriesteuerung oder dergleichen geführt werden müssen. Dies ist ein extrem hoher Aufwand.

Eine weitere allgemein bekannt und genutzte Lösung sieht es vor, dass zusätzliche Spannmatten oder Spannelemente verbaut werden, um den Druck, welcher durch das Zelldickenwachstum, und hier insbesondere das irreversible Zelldickenwachstum, auftritt, aufzufangen. Diese Spannmatten oder Spannelemente erfordern Bauraum und bringen ein zusätzliches Gewicht in das System ein. Sie sind damit nicht nur teuer, sondern verringern auch die Energiedichte bzw. den volumetrischen Energieinhalt das Batterieeinzelzelle, was insbesondere bei Fahrzeugen zu einer Reduzierung der Fahrzeugreichweite führt und daher einen gravierenden Nachteil darstellt.

Da alle Lösungskonzepte entsprechend komplex, aufwändig und/oder nachteilig in der Umsetzung sind, wäre es wünschenswert ein Batteriemodul bzw. ein Messverfahren zu erhalten, welches in der Lage ist, einen thermischen Abriss des Wärmeleitklebers zu erfassen, sodass nach der Erkennung des Abrisses über die Software der Betrieb des Batteriemoduls entsprechend angepasst werden kann, um die Batterieeinzelzellen zu schonen, eine möglichst lange Lebensdauer zu gewährleisten und sicherheitskritische Situationen zuverlässig zu vermeiden.

Dementsprechend ist es die Aufgabe der hier vorliegenden Erfindung ein geeignetes Messverfahren zur Dehnungserfassung anzugeben, welches eine effiziente Detektion eines thermischen Abrisses ermöglicht.

Erfindungsgemäß wird diese Aufgabe durch ein Messverfahren mit den Merkmalen im Anspruch 1, und hier insbesondere im kennzeichnenden Teil des Anspruchs 1, gelöst. Vorteilhafte Ausgestaltungen und Weiterbildungen ergeben sich aus den hiervon abhängigen Unteransprüchen.

Das Batteriemodul für das erfindungsgemäße Messverfahren umfasst mehrere Batterieeinzelzellen, welche über einen Wärmeleitkleber mit einer gekühlten Bodenplatte verbunden sind, wie es so auch aus dem Stand der Technik bekannt und beim Aufbau von Batteriemodulen allgemein üblich ist. Ferner ist es nun so, dass in den Wärmeleitkleber wenigstens eine Lichtleitfaser eingebettet ist, welche Teil einer faseroptischen Messeinrichtung zur Dehnungsmessung

ist. Über eine solche faseroptische Messeinrichtung zur Dehnungsmessung, welche so prinzipiell bekannt und am Markt erhältlich ist, kann nun die Dehnung an mehreren diskreten Stellen innerhalb der Lichtleitfaser einfach und effizient gemessen werden. Mit einer einzigen Faser, welche gemäß einer vorteilhaften Weiterbildung zwischen den Batterieeinzelzellen und dem Wärmeleitkleber angeordnet und in den Wärmeleitkleber eingebettet ist, lässt sich so die Dehnung an einer Vielzahl von Stellen, insbesondere im Bereich jeder einzelnen der Batterieeinzelzellen, zuverlässig erfassen.

Die faseroptische Messeinrichtung nutzt dafür Licht, welches in die Faser eingekoppelt wird, und welches durch die durchlaufende Faser zu einer Auswerteoptik geleitet oder reflektiert und zu der mit der Einkoppeloptik zusammengefügten Auswerteoptik geleitet wird, um die konkrete Dehnung an einzelnen Stellen innerhalb des Lichtleiters zu erfassen. Solche faseroptischen Messeinrichtungen werden z.B. auch bei der Überwachung von Bauwerken und dergleichen eingesetzt. Dabei erfolgt beispielsweise eine Messung der Frequenzverschiebung eines Referenzstrahls gegenüber einen durch die Lichtleitfaser laufenden Laserlichtstrahl.

Das Messverfahren gemäß der Erfindung dient zur Erfassung der Dehnung im Bereich der Anbindung der Batterieeinzelzellen an die gekühlte Bodenplatte eines solchen Batteriemoduls. Erfindungsgemäß wird dabei die Dehnung der Lichtleitfaser an mehreren konkreten Messstellen erfasst. Erfindungsgemäß wird ein Abriss des Wärmeleitklebers an einer der Messstellen durch einen Abfall der auftretenden Dehnung nach einem zuvor erfassten Maximum detektiert. Hierdurch ist es möglich durch eine im Sinne der unten noch beschriebenen Abtastrate "quasi kontinuierliche" Überwachung festzustellen, dass die Dehnung ansteigt. Es finden also gemäß dieser Abtastrate aufeinanderfolgende Messungen statt. Die ansteigende Dehnung ist ein Zeichen für eine hohe mechanische Belastung. Nimmt sie danach, also zeitlich nach einem bei einer vorhergehenden Messung erfassten Maximum bei einer erneuten Messung schlagartig ab, ist es zu einem Abriss des Wärmeleitklebers gekommen, sodass im Bereich dieser Messstelle nun also von einer verringerten Wärmeleitfähigkeit des Wärmeleitklebers in Richtung der Kühlplatte ausgegangen werden kann und über die Steuerungssoftware des Batteriemoduls hier entsprechend gegengehalten werden sollte, um die Leistungsfähigkeit und Lebensdauer des Batteriemoduls durch den schonenden Betrieb auch weiterhin möglichst hoch halten zu können.

Die Abtastrate, also diejenige Zeitspanne, innerhalb welcher jeweils eine Messung durchgeführt wird, kann dabei in der Größenordnung von einer Minute liegen. Eine solche Abtastrate ermöglicht einerseits eine hohe Sicherheit und reduziert andererseits den Aufwand gegenüber höheren Abtastraten erheblich, was von entscheidendem Vorteil ist, da die verfügbaren Rechen- und Speicherkapazitäten in Fahrzeugsystemen typischerweise beschränkt sind, sodass sie von einer Optimierung hinsichtlich der notwendigen Rechenkapazität einerseits bei einem Aufrechterhalten der erforderlichen Sicherheit andererseits besonders stark profitieren.

Neben den reinen mechanischen Dehnungen, welche letztlich in einem Abriss des Wärmeleitklebers resultieren können, was hier entsprechend detektiert werden soll, treten in einem solchen System auch thermisch induzierte Dehnungen auf, welche mit den mechanischen Dehnungen überlagert sind. Gemäß einer außerordentlich günstigen Weiterbildung des Messverfahrens gemäß der Erfindung ist es daher vorgesehen, dass thermisch induzierte Dehnungen über einen Kompensationsfaktor eliminiert werden. Ein solcher Kompensationsfaktor kann gemäß einer sehr vorteilhaften Ausgestaltung des Messverfahrens zuvor experimentell bestimmt worden sein. Damit lässt sich die erfasste Dehnung rechnerisch auf die rein mechanische Dehnung zurückrechnen.

Die an den Messstellen erfassten Dehnungsfelder können dabei gemäß einer sehr vorteilhaften Ausgestaltung des erfindungsgemäßen Verfahrens zu einem gemittelten Dehnungswert zusammengefasst werden, auch hierdurch kann wieder Speicher- und Rechenaufwand hinsichtlich der Auswertung eingespart werden.

Für das erfindungsgemäße Messverfahren kann die wenigstens eine Lichtleitfaser gemäß einer vorteilhaften Weiterbildung an mehreren diskreten Messstellen von einem Röhrchen ummantelt werden. Die Lichtleitfaser kann also an denjenigen Stellen, an denen die Dehnung erfasst werden soll, von einem Röhrchen ummantelt sein. Hierfür können typischerweise Teflonröhrchen zum Einsatz kommen. Sie schützen die Faser in diesem Bereich vor dem Wärmeleitkleber, sodass die Faser die auftretende Dehnung innerhalb des Röhrchens und damit an der gewünschten Messstelle weitgehend unabhängig von dem Kleber selbst, welcher ansonsten mit der Lichtleitfaser verklebt wäre, aufnehmen kann. Hierdurch lässt sich besonders zuverlässig über den Dehnungswert auf einen Abriss des Wärmeleitklebers schließen.

Wie bereits erwähnt wird die Lichtleitfaser in dem den Batterieeinzelzellen zugewandten Bereich des Wärmeleitklebers angeordnet. Sie kann insbesondere mit den zu einem Block verspannten Batterieeinzelzellen des Batteriemoduls verbunden werden, indem die Lichtleitfaser auf diese aufgeklebt wird. Im Anschluss wird dieser Aufbau dann mit dem Wärmeleitkleber bestrichen und mit der gekühlten Bodenplatte abgeschlossen. Die Lichtleitfaser sitzt damit unmittelbar im Bereich des Übergangs zwischen den Batterieeinzelzellen und dem Wärmeleitkleber und kann damit einen potentiellen Abriss an dieser besonders kritischen Grenzschicht zuverlässig erfassen.

Die Batterieeinzelzellen können dabei als prismatische Batterieeinzelzellen ausgebildet und aufgestapelt sein, wobei die primäre Laufrichtung der wenigstens einen Lichtleitfaser in Stapelrichtung ausgerichtet ist. Primär in diesem Zusammenhang bedeutet, dass immer dort, wo die Messung erfolgen soll, die Lichtleitfaser zumindest abschnittsweise in Stapelrichtung verläuft. Hierdurch ist es möglich die Messung der Dehnung in der besonders hoch belasteten Richtung entlang der Stapelrichtung der prismatischen Batterieeinzelzellen aufzunehmen.

Daneben ist selbstverständlich auch der Einsatz bei anderen möglichen Formen der Batterieeinzelzellen, also

beispielsweise einem Zellmodul mit zylindrischen Batterieeinzelzellen, denkbar.

Weitere vorteilhafte Ausgestaltungen des Batteriemoduls und des Messverfahrens gemäß der Erfindung ergeben sich auch anhand des Ausführungsbeispiels, welches nachfolgend unter Bezugnahme auf die Figuren näher beschrieben ist.

Dabei zeigen:

Fig. 1 eine schematische Darstellung eines Aufbaus eines Batteriemoduls mit den resultierenden Bewegungen und Gegenkräften infolge des Zelldickenwachstums;

Fig. 2 eine schematische Darstellung des Zelldickenwachstums über unterschiedliche Lebensphasen eines Batteriemoduls;

Fig. 3 eine schematische Ansicht des Batteriemoduls von unten mit aufgebrachter Lichtleitfaser einer faseroptischen Messeinrichtung;

Fig. 4 eine schematische Darstellung der Auswertung der örtlichen Dehnung infolge der Temperaturbelastung; und

Fig. 5 eine exemplarische Auswertung von drei Messstellen in einem Alterungstest.

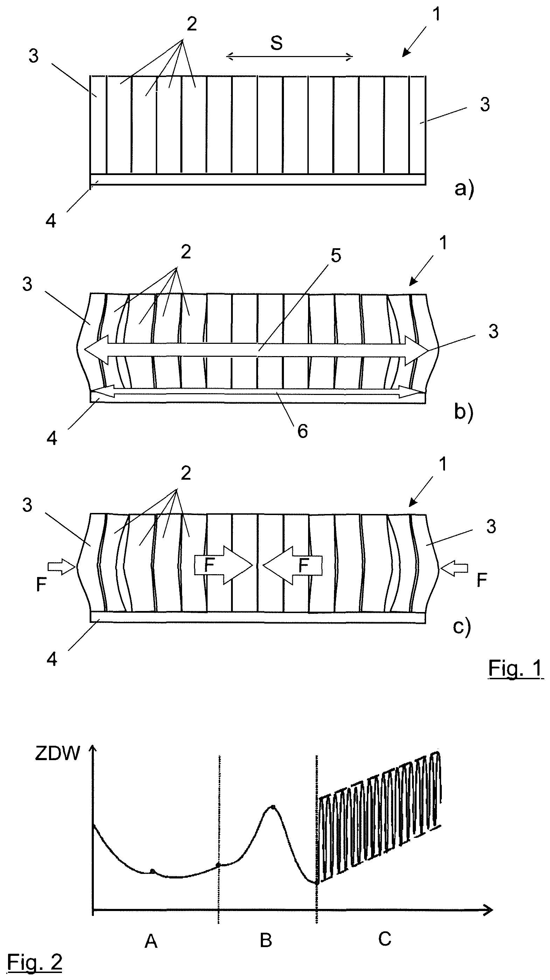

In einem in Figur 1a erkennbaren typischen Aufbau von Batteriemodulen 1 sind prismatische Batterieeinzelzellen 2 aufgestapelt und zwischen Endplatten 3 miteinander verspannt. Dieser auch als Zellblock bezeichnete Aufbau ist dann mit einer gekühlten Bodenplatte 4 über einen Schicht Wärmeleitkleber, welcher hier nicht erkennbar ist, verklebt. Dieser Aufbau ist soweit allgemein bekannt und bei Traktionsbatterien für Fahrzeuganwendungen, welche beispielsweise in Lithium-Ionen-Technologie ausgeführt sind, gebräuchlich.

In der Darstellung der Figur 1b ist nun dieser in der Darstellung der Figur 1a zu Beginn seiner Lebensdauer dargestellte Aufbau des Batteriemoduls nochmals zu erkennen, wobei über den oberen Doppelpfeil 5 das Zelldickenwachstum dargestellt ist, während der untere Doppelpfeil 6 die Verschiebung einzelner Zellen 2 gegenüber der gekühlten Bodenplatte 4 darstellt. In der Figur 1c sind die aus diesem Zelldickenwachstum resultierenden Gegenkräfte innerhalb des Batteriemoduls 1 nochmals schematisch dargestellt. Die Verschiebungen führen nun zu Zug- und Scherbelastungen im Bereich des Wärmeleitklebers, welche zu einem Abriss des Wärmeleitklebers im Bereich einzelner der Batterieeinzelzellen 2 führen können. Der Grund hierfür liegt in der Verschiebung des Zellblocks gegenüber der gekühlten Bodenplatte 4, welche sowohl aus dem reversiblen als auch den irreversiblen Zelldickenwachstum herrührt. Dieses Zelldickenwachstum, welches eingangs bereits ausführlich erläutert worden ist, führt im Wesentlichen zu einem Wachstum der Zellen in die Dickenrichtung bzw. Stapelrichtung, welche hier von der einen Endplatte 3 zur anderen Endplatte 3 verläuft und in der Darstellung der Figur 1a mit S bezeichnet ist. Da die Endplatten vergleichsweise nachgiebig sind resultieren die Verformungen und Gegenkräfte von außen her in Richtung der Mitte des Zellblocks, wo, wie es in der schematischen Darstellung der Figur 1c zu erkennen ist, die größten Gegenkräfte F vorliegen.

Die Batterieeinzelzellen 2 wachsen dabei reversibel über dem Ladehub. Dieses reversible Zelldickenwachstum, welches auch als "Atmen" bezeichnet wird, führt dazu, dass die

Zellen im geladenen Zustand eine größere Dicke aufweisen als im entladenen Zustand. Diese Art des Zelldickenwachstums ist dabei annähernd reversibel. Über die Alterung der Batterieeinzelzellen 2 kommt es jedoch außerdem zu einem irreversiblen Zelldickenwachstum, sodass die Batterieeinzelzellen 2 mit zunehmender Alterung entsprechend dicker werden, was dem Atmen der Zellen beim Laden und Entladen überlagert ist.

In der Darstellung der Figur 2 ist das Zelldickenwachstum ZDW auf der y-Achse aufgetragen. Die x-Achse umfasst dabei die Abschnitte A, B und C. Im Abschnitt A ist das Verspannen des Batteriemoduls 1 zwischen den Endplatten 3 bei der Montage dargestellt, die Gesamtdicke des Zellblocks nimmt hier also während des Verspannens ab und steigt dann durch die Eigenelastizität der Spannmittel nach Abschluss des Verspannens geringfügig wieder an. Die Zeitspanne für den Abschnitt A liegt dabei im Bereich einiger Sekunden.

Im Abschnitt B ist die Zeitspanne von einigen Stunden dargestellt. Hier ist ein Hub des reversiblen Zelldickenwachstums beim Laden entsprechend dargestellt. Beim Übergang vom Abschnitt A in den Abschnitt B liegt ein gewisser Ladezustand vor, welcher dann bis zum Maximum ansteigt, wobei hier jede der Batterieeinzelzellen 2 ihre maximale Dicke aufweist. Beim Entladen auf einen minimalen Ladezustand am Übergang zwischen den Abschnitten B und C fällt die Zelldicke dann wieder ab. Der Zeitabschnitt umfasst einige Jahre und zeigt schematisch dargestellt die Überlagerung des reversiblen Zelldickenwachstums mit dem alterungsbedingten irreversiblen Zelldickenwachstum, sodass die einzelnen Ladehübe und die durch sie verursachten reversiblen Zelldickenänderungen durch einen zunehmenden alterungsbedingten Dickenanstieg bestimmt werden.

Wie eingangs bereits erwähnt führt das Zelldickenwachstum der Batterieeinzelzellen 2 und die daraus resultierende Verschiebung der Batterieeinzelzellen 2 gegenüber der gekühlten Bodenplatte 4 zu entsprechenden Belastungen, welche durch den Wärmeleitkleber aufgenommen werden müssen. Da die Gegenkräfte nach außen hin, also zu den Endplatten 3 hin geringer sind als in der Zellmitte, addieren sich dort die Verschiebungen der Einzelzellen entsprechend auf, sodass die Verschiebungen zu den beiden Endplatten 3 hin am größten sind. Somit können sich vor allem die Batterieeinzelzellen 2 am Rand entsprechend ablösen, wenn der Wärmeleitkleber reißt.

Die thermische Anbindung am Wärmeleitkleber geht dann verloren. Unter Ablösen in diesem Sinn sind dabei Mikrorisse zu verstehen, welche sich am Wärmeleitkleber infolge der Verschiebung bzw. der Scherspannung ausbilden. Diese Mikrorisse führen dazu, dass sich die Wärmeleitfähigkeit in dem Verbund entsprechend verschlechtert. Ein solches Ablösen bzw. Abreißen des Wärmeleitklebers führt nun dazu, dass die betroffenen Batterieeinzelzellen sich kontinuierlich stärker erwärmen. Damit steigen die Alterung und damit letztlich auch das alterungsbedingte irreversibel Zelldickenwachstum dieser Batterieeinzelzellen.

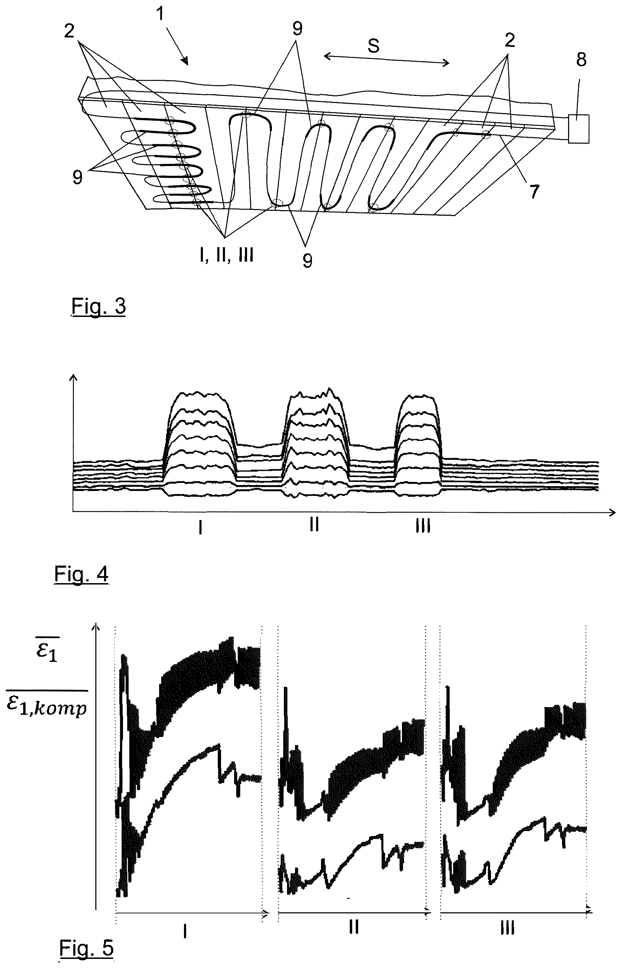

Ein erkannter Abriss kann jedoch über die Steuerungssoftware des Batteriemoduls entsprechend abgefedert werden. Um einen solchen nun einfach und effizient zu erkennen wird hier ein spezielles Messverfahren verwendet, um einen Abriss bzw. eine Überschreitung der zulässigen Dehnung zu erfassen. Zwischen dem Wärmeleitkleber und den Batterieeinzelzellen 2 des Batteriemoduls 1 wird dazu eine in der Darstellung der Figur 3, welche einen Blick von unten auf einen Stapel der Batterieeinzelzellen 2 zeigt, erkennbaren Lichtleitfaser 7 verwendet. Diese wird beispielsweise auf den Zellblock von unten aufgeklebt, wie es in der Darstellung der Figur 3 zu erkennen ist. Die mit der Lichtleitfaser 7 verbundene faseroptische Messeinrichtung und die Elektronik zur Einkopplung des (Laser-)Lichts und zur Auswertung desselben ist durch den mit 8 bezeichneten Kasten angedeutet ist. Die faseroptische Messeinrichtung 8 ist dabei in der Lage, über die Lauflänge der Lichtleitfaser 7 hinweg, an einzelnen diskreten Messstellen die Dehnung zu erfassen.

Der in Figur 3 dargestellte Aufbau wird nun mit dem Wärmeleitkleber versehen und die gekühlte Bodenplatte 4 wird über diesen Wärmeleitkleber befestigt. Um zu verhindern, dass die Lichtleitfaser 7 in den für die Messung relevanten Bereichen in dem Wärmeleitkleber feststeckt, sind in diesem Bereich kleine Teflonröhrchen um die Lichtleitfaser 7 angeordnet. Diese sind in der Darstellung der Figur 3 durch die etwas höhere Strichdicke und das Bezugszeichen 9 erkennbar. Die Lichtleitfaser selbst kann dabei in beliebiger Art verlegt werden. Da das primäre Zelldickenwachstum in der Stapelrichtung S auftritt, sollten zumindest diejenigen Bereiche, welche die Messstellen innerhalb der Lichtleitfaser 7 der faseroptischen Messeinrichtung 8 darstellen, in diese Stapelrichtung S verlaufen. Dies wird bei dem hier gezeigten Aufbau entsprechend realisiert.

Mit einer Abtastrate in der Größenordnung von ungefähr einer Minute lassen sich dabei sehr gute Messungen der Dehnung erreichen, welche die Verschiebungen infolge des Zelldickenwachstums sehr gut erfassbar machen. In der Darstellung der Figur 4 sind nun die verschiedenen Dehnungen an drei Messstellen I, II und III erkennbar, wenn in einem Versuchsaufbau die entsprechenden Temperaturprofile abgefahren werden. Die einzelnen in y-Richtung aufgestapelten Linien zeigen dabei die Dehnungen bei verschiedenen Temperaturen an den drei mit I, II und III bezeichneten beispielhaften Messstellen.

Neben den elektrochemischen/mechanischen Dehnungen infolge des Zelldickenwachstums der Batterieeinzelzelle 2, welche hier erfasst werden sollen, treten dabei also auch diesen überlagerte thermisch induzierte Dehnungen auf. Von daher kann es vorgesehen werden, dass die Dehnung $\varepsilon$ von den thermisch induzierten Dehnungen über einen Ausdehnungs- bzw. Kompensationsfaktor $\alpha$ bereinigt werden. In entsprechenden Messungen und Analysen hat sich dabei gezeigt, dass dieser Kompensationsfaktor bei

$$\alpha = 30{,}25\ \frac{\mu m}{m}\frac{1}{K}$$

liegt.

Um nun den Aufwand hinsichtlich der Speicherung und Auswertung von Messdaten entsprechend zu reduzieren, werden die Messstellen, die jeweils ein Dehnungsfeld darstellen, auf eine Dehnung reduziert. Dazu werden die Dehnungsfelder $\varepsilon_1(x)$ über die Messstelle gemittelt, und zwar über das Integral der nachfolgenden Gleichung:

$$\overline{\varepsilon_1}(t) = \int_{x_{Start}}^{x_{End}} \varepsilon_1(x,t)\, x\, dx$$

Um nun die Temperatur zu kompensieren, wird diese Gleichung um den oben angesprochenen Kompensationsfaktor $\alpha$ ergänzt

$$\overline{\varepsilon_{1,komp}}(t) - \int_{x_{Start}}^{x_{End}} \varepsilon_1(x,t)\, x\, dx - \alpha_1\,(T(t) - T_0)$$

Der Kompensationsfaktor $\alpha$ multipliziert mit der Temperaturdifferenz kann also genutzt werden, um eine

thermisch kompensierte mittlere Dehnung

$$\overline{\varepsilon_{1.komp}}$$

an der jeweiligen Messstelle I, II, III zu berechnen.

In der nachfolgenden Darstellung der Figur 5 sind nun an den drei exemplarischen Messstellen I, II, III die absolute mittlere Dehnung $\overline{\varepsilon_1}$ und die temperaturkompensierte mittlere Dehnung $\overline{\varepsilon_{1.komp}}$ jeweils in einem Diagramm für jede der Messstellen I, II, III dargestellt. Die Dehnung ist dabei auf der y-Achse aufgetragen, die x-Achse zeigt die Anzahl der Zyklen, welche hier beispielhaft bei jeweils ca. 150 Zyklen auf die Gesamtbreite der jeweiligen Messstelle liegt.

Erkennbar ist dabei, dass die Dehnung $\varepsilon$ eine maximale Dehnung bereits nach wenigen Zyklen erreicht und anschließend entsprechend abnimmt. Dies deutet darauf hin, dass die Verschiebungen zu einem Abriss des Wärmeleitklebers geführt haben, und in der Tat ließ sich diese Vermutung durch einen entsprechenden thermischen Kühlungstest auf einem Prüfstand unter Einsatz zahlreicher Temperatursensoren entsprechend verifizieren. Ferner ist es aus den Figuren erkennbar, dass die Dehnungen $\varepsilon$ und damit letztlich die Verschiebungen nach dem Abriss, also dem Ausbilden von Mikrorissen, weiter zunehmen, und die Problematik entsprechend verstärken.

Es wäre also wünschenswert hier nach dem detektierten Abriss, welcher sich also aus einem Abfall der Dehnungen $\varepsilon$ nach dem Erreichen eines Maximums detektiert, über die Software der Batteriesteuerung entsprechend gegenzusteuern, um so eine möglichst geringe Beeinträchtigung der jeweiligen Batterieeinzelzellen durch diesen Abriss zu gewährleisten.

## Patentansprüche

1. Messverfahren zur Erfassung der Dehnung im Bereich der Anbindung von Batterieeinzelzellen (2) an eine gekühlte Bodenplatte (4) eines Batteriemoduls (1) mit mehreren Batterieeinzelzellen (2), welche über einen Wärmeleitkleber mit der gekühlten Bodenplatte (4) verbunden sind,

    wobei in den Wärmeleitkleber wenigstens eine Lichtleitfaser (7) eingebettet ist, welche Teil einer faseroptischen Messeinrichtung (8) zur Dehnungsmessung ist, wobei die Dehnung der Lichtleitleitfaser (7) an mehreren konkreten Messstellen (I, II, III) mit gemäß einer Abtastrate aufeinanderfolgenden Messungen erfasst wird,
    **dadurch gekennzeichnet, dass**
    ein Abriss des Wärmeleitklebers an einer der Messstellen (I, II, III) durch einen Abfall der auftretenden Dehnung bei einer Messung, nach einem bei einer vorhergehenden Messung erfassten Maximum detektiert wird.

2. Messverfahren nach Anspruch 1,
    **dadurch gekennzeichnet, dass**
    die Abtastrate in der Größenordnung von einer Minute liegt.

3. Messverfahren nach einem der Ansprüche 1 oder 2,
    **dadurch gekennzeichnet, dass**
    die an den Messstellen (I, II, III) erfassten Dehnungsfelder ($\varepsilon$) zu einem gemittelten Dehnungswert ($\overline{\varepsilon}$) zusammengefasst werden.

4. Messverfahren nach einem der Ansprüche 1, 2 oder 3,
    **dadurch gekennzeichnet, dass**
    die Lichtleitfaser (7) an den mehreren diskreten Messstellen (I, II, III) von einem Röhrchen (8) ummantelt wird.

5. Messverfahren nach einem der Ansprüche 1 bis 4,
    **dadurch gekennzeichnet, dass**
    die Messung bei einem Batteriemodul (1) erfolgt, dessen Batterieeinzelzellen (2) als prismatische Batterieeinzelzellen ausgebildet und aufgestapelt sind, wobei die primäre Laufrichtung der Lichtleitfaser (7) in Stapelrichtung (S) ausgerichtet ist.

## Claims

1. Measurement method for determining the strain in the area of the connection of individual battery cells (2) to a cooled

base plate (4) of a battery module (1) having a plurality of individual battery cells (2) which are connected to the cooled base plate (4) via a thermally conductive adhesive,

at least one optical fiber (7) being embedded in the thermally conductive adhesive, which fiber is part of a fiber optic measuring device (8) for the strain measurement, the strain of the optical fiber (7) being determined at a plurality of specific measuring points (I, II, III) with successive measurements according to a sampling rate,
**characterized in that**
a tear in the thermally conductive adhesive at one of the measuring points (I, II, III) is detected by a drop in the strain occurring during a measurement, after a maximum determined during a previous measurement.

**2.** Measurement method according to claim 1,
**characterized in that**
the sampling rate is on the order of one minute.

**3.** Measurement method according to either claim 1 or claim 2,
**characterized in that**
the strain fields ($\varepsilon$) determined at the measuring points (I, II, III) are combined to form an average strain value ($\bar{\varepsilon}$).

**4.** Measurement method according to any of claims 1, 2 or 3,
**characterized in that**
the optical fiber (7) is encased by a tube (8) at the plurality of discrete measuring points (I, II, III).

**5.** Measurement method according to any of claims 1 to 4,
**characterized in that**
the measurement is performed on a battery module (1), the individual battery cells (2) of which are designed as prismatic individual battery cells and stacked, the primary direction of travel of the optical fiber (7) being aligned in the stacking direction (S).

## Revendications

**1.** Procédé de mesure permettant d'enregistrer la dilatation dans la zone de la liaison d'éléments individuels de batterie (2) à une plaque formant fond (4) refroidie d'un module de batterie (1) comportant plusieurs éléments individuels de batterie (2), lesquels sont reliés à la plaque formant fond (4) refroidie par l'intermédiaire d'un adhésif thermoconducteur,

dans lequel au moins une fibre optique (7) est encastrée dans l'adhésif thermoconducteur, laquelle fait partie d'un dispositif de mesure à fibre optique (8) pour la mesure de dilatation, dans lequel la dilatation de la fibre optique (7) est enregistrée au niveau d'une pluralité de points de mesure (I, II, III) concrets au moyen de mesures qui se succèdent selon une fréquence d'échantillonnage,
**caractérisé en ce que**
une rupture de l'adhésif thermoconducteur au niveau de l'un des points de mesure (I, II, III) est détectée par une baisse de la dilatation observée lors d'une mesure, d'après un maximum enregistré lors d'une mesure précédente.

**2.** Procédé de mesure selon la revendication 1,
**caractérisé en ce que**
la fréquence d'échantillonnage est de l'ordre d'une minute.

**3.** Procédé de mesure selon l'une des revendications 1 ou 2,
**caractérisé en ce que**
les champs de dilatation ($\varepsilon$) enregistrés au niveau des points de mesure (I, II, III) sont regroupés en une valeur de dilatation ($\bar{\varepsilon}$) moyenne.

**4.** Procédé de mesure selon l'une des revendications 1, 2 ou 3, **caractérisé en ce que**
la fibre optique (7) est gainée par un petit tube (8) au niveau des points de mesure (I, II, III) discrets.

**5.** Procédé de mesure selon l'une des revendications 1 à 4,

**caractérisé en ce que**
la mesure est effectuée sur un module de batterie (1) dont les éléments individuels de batterie (2) sont réalisés et empilés sous forme d'éléments individuels de batterie prismatiques, dans lequel le sens de déplacement primaire de la fibre optique (7) est orienté dans le sens d'empilement (S).

1
2
S
3
3
a)
4
1
2
5
3
3
b)
4
6
1
2
3
3
F
F
F
F
c)
4


Fig. 1

ZDW
A
B
C


Fig. 2

1
2
9
S
2
8
9
7
I, II, III
9

Fig. 3

I
II
III

Fig. 4

$\frac{\overline{\varepsilon_1}}{\overline{\varepsilon_{1,komp}}}$
I
II
III

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20180361855 A1
- DE 102015115102 A1
- DE 102021006259 A1
- DE 102023000537 A1
- DE 102014219720 A1
- EP 4276432 A1
- CN 115790891 A1